# EUROPEAN PATENT SPECIFICATION

(11) **EP 3 187 050 B1**
(45) Date of publication and mention of the grant of the patent: **25.04.2018**
(21) Application number: 16202493.9
(22) Date of filing: 06.12.2016
(51) Int. Cl.: A21C 1/02, B01F 11/00

(54) **KNEADING MACHINE FOR USE IN THE PROCESSING OF FOOD DOUGHS**
KNETMASCHINE ZUR VERWENDUNG IN DIE BEARBEITUNG VON NAHRUNGSTEIG
PÉTRISSEUSE À UTILISER DANS LE TRAITEMENT DES PÂTES ALIMENTAIRES

(30) Priority: 23.12.2015 IT UB20159690
(43) Date of publication of application: 05.07.2017
(73) Proprietor: Enodia Srl Unipersonale, 36034 Vicenza (IT)
(72) Inventor: SOTTORIVA, PIETRO, 36035 Vicenza (IT)
(74) Representative: Bettello, Pietro

(56) References cited:
- DE-C- 180 688
- DE-C- 199 398
- DE-C- 257 964
- FR-A- 393 466
- FR-E- 11 823

## Description

The present invention relates to a kneading machine for use in the processing of food doughs, of the mechanical arm type, according to the general part of claim 1.

As is well known, kneading machines used in the food industry consist of machines for mixing ingredients, generally consisting of water, flour, yeast and salt, with the addition of other secondary foods, as well as for the blending thereof, to obtain a homogeneous mass of dough, intended for subsequent processes and the final baking.

All kneading machines consist of a fixed structure, containing the movement members of the kneading tools and, optionally, also a tub containing the ingredients to be mixed, as well as a kneading or a pair of kneading tools bearing a shaped implement at the end for mixing the ingredients, and an electrical control panel.

In relation to the type of kneading tool used, the kneading machines are divided into the following types:
- the so-called spiral kneaders and the so-called fork kneaders, where the kneading tool consists of a spiral or a fork rotating about their longitudinal axis;
- the so-called planetary kneaders, where the tool consists of a whip, provided with a planetary motion about a vertical axis;
- the so-called mechanical arm kneaders, where a pair of kneading tools is mounted on an articulated element, which confers a roto-translation movement to said tools on a vertical plane.

In practice, in the kneading machines with mechanical arms of the known type, used in bakeries, breadstick factories, pastries and confectionery industries, the two kneading tools work each on one half of the tub and only the rotation of said tub allows the whole mass of the dough to be processed by both kneading tools.

The documents FR393466A, DE199398C, DE180688C, FR11823E and DE257964C describe kneading machines, in accordance with the preamble of claim 1, with mechanical arms which provide that the kneading tool completes a trajectory which is extended beyond half and up to being extended for the entire diameter of the tub in which the dough is placed, so that the terminal part of said tool, where the shaped implement is applied, which is immersed in the mass of the dough, both in the outward travel and in the return travel acts on the entire mass of said dough.

The object of the present invention is to provide a kneading machine with mechanical arms which allows performing the mixing and blending of the dough with better results than those obtainable with similar machines of known type.

In particular, the object of the invention is to provide a kneading machine with mechanical arms which ensures an optimal oxygenation of the dough; a condition that is required also in domestic kneaders where the tub, with a load of dough that ranges from a minimum of 2.5 kg to a maximum of 7 kg, is removable and, as a rule, not rotating.

This is achieved by means of a kneading machine that has the features of the characterizing part of claim 1.

Specifically, in order to ensure maximum mixing and blending action of the entire mass of the dough, the kneading machine according to the invention is provided with two kneading tools as described above, which operate on two parallel vertical planes with concordant or mutually opposite directions.

The features of the invention will be better understood by the description of a possible embodiment thereof, given only by way of non-limiting example, with the aid of the accompanying drawings, in which:
- fig. 1 (dwg. I) represents a schematic view of a kneading tool provided with the innovative kneading tool;
- figs. 2, 3 (dwg. II) represent two successive steps, the outward and return step, respectively, of the kneading tool in fig. 1;
- fig. 4 (dwg. I) represents an elevation view of a kneading tool provided with two opposite kneading tools;
- fig. 5 (dwg. IV) represents a plan view of the kneading machine in fig. 4.

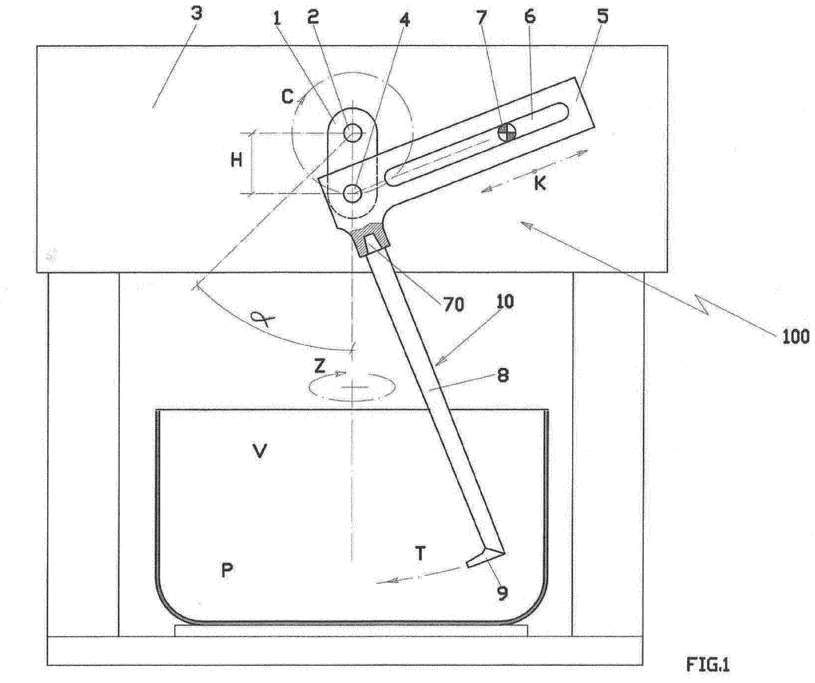

As shown in fig. 1, the articulated system, generally designated by the reference numeral 100, which imparts a translational/oscillating movement to tool 10 on a vertical plane, consists of a crank 1, rotating by 360° around an end driving pin 2, mounted on the support plate 3, while a button 4 is present in the other end, hinged with the end of a bar 5, in which a slit 6 is formed, which is engaged in a fixed pin 7 protruding from said support plate and where the extended arm 8 of tool 10 is applied to said bar 5.

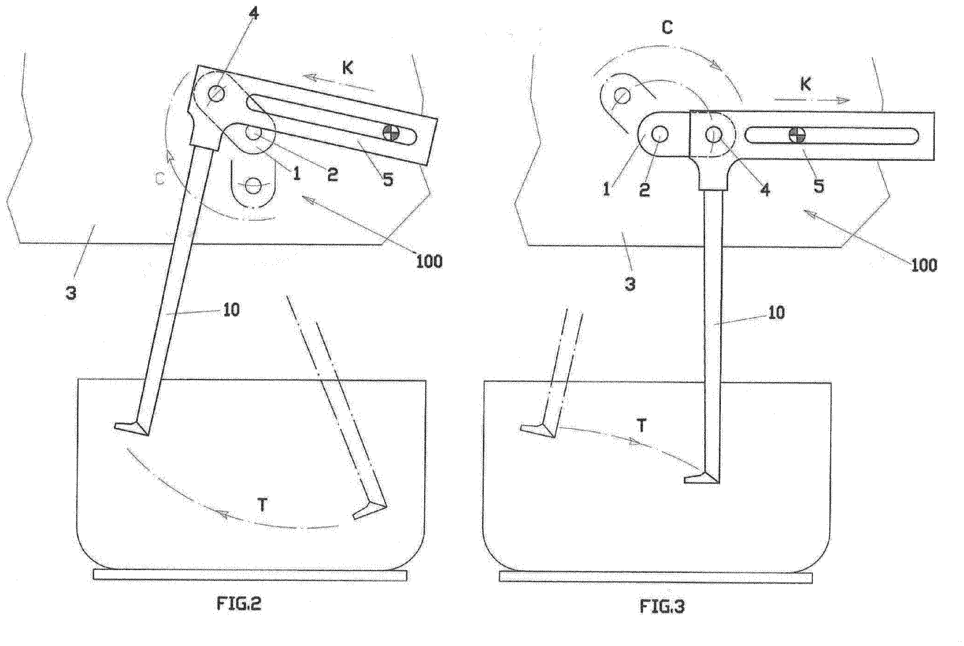

Operatively, as can be seen in succession in figs. 1-3, the 360° circular rotation (see trajectory "C") of crank 1 on pin 2 pulls, by means of button 4, bar 5 which, being engaged to slide with slit 6 on pin 7, performs a reciprocating movement of roto/translation on the aforesaid pin (see arrow "K") so that the entire tool 10 assumes a translational/oscillating movement, which allows the end shaped implement 9 of said tool, which is immersed in the mass of dough "P", to perform an outward/return travel, with trajectory "T" substantially elliptical and extended up to the entire diameter of tub V, necessary to achieve the mixing and blending action of the entire mass of the dough.

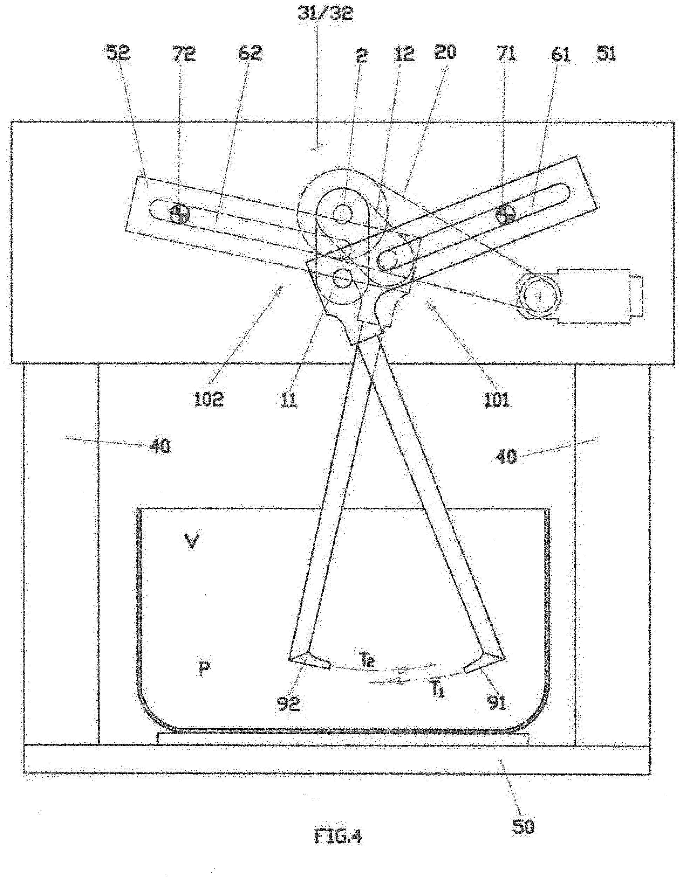

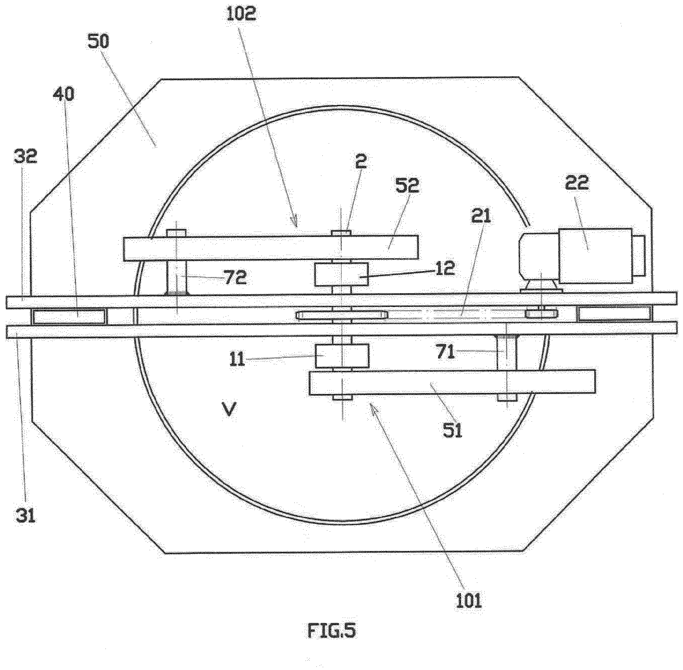

Constructively, as seen in figs. 4-5, a preferred embodiment of the kneading machine with mechanical arms of the invention provides for the use of two articulated systems 101 and 102, arranged mutually opposite, where the two cranks 11 and 12 are keyed to the same driving pin 2, while bars 51 and 52 have the corresponding slits 61 and 62 which are engaged with two fixed pins 71 and 72, protruding from the two corresponding support plates 31 and 32, supported by the vertical uprights 40 and protruding from base 50, where tub "V" is placed , optionally provided with a rotation motion as well (see arrow "Z"), by means of a system not shown but of conventional type.

The driving pin 2 is set in rotation by means of a kinematic control 20 consisting of the chain transmission 21, actuated by motor 22, applied on one of the two support plates 32.

In practice, as seen in fig. 4, with the use of the two articulated systems 101 and 102 according to the invention it is possible to simultaneously make the two kneading tools 10, and more precisely, the end shaped implements 91 and 92, two complete two trajectories "T₁" and "T₂" having the same or mutually opposite directions (as shown), which allows a better mixing and blending action of the dough.

Moreover, the invention provides that in order to better adapt the movement parameters of tool 10, such as the change of the tool movement speed and the change of the trajectory of the end shaped implement 9, to the physical characteristics of dough "P" , to ensure good oxygenation thereof without excessive heating, even at high working speed, it is possible to vary the distance "H" of crank 1, which is the distance between the driving pin 2 and button 4 and/or it is possible to vary the angle "α" defined by the longitudinal axis of crank 1 locked on the driving pin 2 so that, when two articulated systems 101 and 102 are used, the two cranks 11 and 12, being locked on the same driving pin 2, may switch from a position in which they are mutually aligned with respect to the axis of said driving pin 2, to a position in which they are mutually inclined, always with respect to the axis of said driving pin 2. Finally, the invention provides that tool 10 is removably applied on bar 5 by means, for example, of a rapid attack 70.

The present invention, which has proved particularly advantageous in the production of kneading machines with mechanical arms of the household type, used in the processing of soft dough to make, for example, bread dough, may take different forms and aspects than those illustrated and described without prejudice to its essential features, which must not, however, depart from the scope of the patent, being defined by the appended claims.

## Claims

1. KNEADING MACHINE FOR USE IN THE PROCESSING OF FOOD DOUGHS, to be used in bakeries, breadstick factories, pastries and confectionery industries in general, as well as for domestic use for the preparation of dough for bread, pizza and confectionery, of the so-called mechanical arm type, wherein at least a kneading tool is mounted on an articulated element, which imparts to said tool a movement that allows a shaped tool mounted at the end of the said kneading tool and immersible in the mass of the dough to carry out the necessary actions of mixing and blending of the dough, contained in a tub (V), provided, as a rule, with a rotational motion, or fixed, said kneading machine providing that the kneading tool (10) complete a trajectory which is extended beyond half and up to being extended for the entire diameter of the tub (V), so that the terminal part of said tool, where the shaped implement is applied (9), which is immersed in the mass of the dough (P), both in the outward travel and in the return travel, acts on the entire mass of the dough, said kneading machine **being characterized in that** the tool (10) is provided with a translational/oscillating movement on the vertical plane conferred by means of an articulated system (100) constituted by a crank (1), rotating 360° around an end driving pin (2), while a button (4) is present in the other end, said button hinged with the end of a bar (5), in which a slit is obtained (6), which is engaged in a fixed pin (7), protruding from the above support plate (3), an extended arm (8) of the tool (10) being applied to said bar (5).

2. KNEADING MACHINE, according to claim 1, **characterized in that** the 360° circular rotation of the crank (1) on the pin (2), pulls, by means of the button (4), the bar (5) which, being engaged to slide with the slit (6) on the pin (7), performs a reciprocating movement of roto/translation on the aforesaid pin so that the entire tool (10) assumes a translational/oscillating movement, which allows the end shaped implement (9) of said tool to perform an outward/return travel, with trajectory (T) substantially elliptical and extended up to the entire diameter of the tub (V), necessary to achieve the mixing and blending action of the entire mass of the dough.

3. KNEADING MACHINE, according to one or more of the preceding claims, **characterized in that** it provides for the use of two articulated systems (101, 102), arranged mutually opposite, where two cranks (11, 12) are keyed to the same driving pin (2), while the bars (51, 52) have corresponding slits (61, 62) which are engaged with two fixed pins (71, 72), protruding from two corresponding support plates (31, 32), supported by the vertical uprights (40) and protruding from the base (50), where the tub is placed (V).

4. KNEADING MACHINE, according to claim 3, **characterized in that** the driving pin (2) is set in rotation by means of a kinematic control (20) consisting of a chain transmission (21), actuated by a motor (22), applied on one of the two support plates (32).

5. KNEADING MACHINE, according to claim 3, **characterized in that** the two articulated systems (101,102) allow the two kneading tools (10), and more precisely, to end shaped implements (91, 92), to simultaneously complete two trajectories (T₁, T₂), having the same or mutually opposite directions.

6. KNEADING MACHINE, according to one or more of the preceding claims, **characterized in that** it is possible to vary the center distance (H) of the crank (1), that is the distance between the driving pin (2) and the button (4).

7. KNEADING MACHINE, according to one or more of the preceding claims, **characterized in that** it is possible to vary the angle (α), defined by the longitudinal axis of the crank (1) blocked on the driving pin (2), such that, when two articulated systems (101, 102) are used, the two rods (11, 12), being blocked on the same driving pin (2), can vary from a position in which they are mutually aligned with respect to the axis of said driving pin (2), to a position in which they are mutually tilted, always with respect to the axis of said driving pin (2).

8. KNEADING MACHINE, according to one or more of the preceding claims, **characterized in that** the tool (10) is removably applied on the bar (5) by means of a rapid attack (70).

## Patentansprüche

1. KNETMASCHINE ZUR VERWENDUNG IN DIE BEARBEITUNG VON NAHRUNGSTEIG für Bäckereien, Grissini-Hersteller, Back- und Süßwarenindustriebetriebe im Allgemeinen sowie für den häuslichen Gebrauch zur Herstellung von Teig für Brot, Pizza und Süßwaren, des Typs mit so genanntem mechanischem Knetarm, wobei wenigstens ein Knetwerkzeug an einem gelenkigen Element montiert ist, welches eine Bewegung des Werkzeugs bewirkt, die es dem in die Teigmasse eingetauchten, geformten, am Ende desselben montierten Werkzeug erlaubt, die erforderlichen Vorgänge zum Mischen des Teigs vorzunehmen, der in einer Schüssel (V) enthalten ist, die in der Regel drehbeweglich oder fest ist, wobei vorgesehen ist, dass die Knetmaschine es dem Knetwerkzeug (10) erlaubt, eine Bewegungsbahn auszuführt, die sich über mehr als die Hälfte des Durchmessers und bis über den vollständigen Durchmesser der Schüssel (V) erstreckt, so dass das Endteil des Werkzeugs, an dem das endgeformte, in die Teigmasse (P) eingetauchte Arbeitsteil (9) angebracht ist, sowohl beim Auswärtslauf als auch beim Rückwärtslauf auf die gesamte Teigmasse einwirkt, wobei die Knetmaschine **dadurch gekennzeichnet ist, dass** das Werkzeug (10) mit einer Translations- und Pendelbewegung auf der vertikalen Ebene versehen ist, die mittels eines Gelenksystems (100) übertragen wird, das aus einer Kurbel (1) besteht, die sich um 360° um einem End-Mitnehmerzapfen (2) dreht, während am anderen Ende ein Knopf (4) vorhanden ist, wobei der Knopf an das Ende einer Stange (5) angelenkt ist, in der ein Schlitz (6) herausgearbeitet ist, der mit einem aus der oberen Stützplattte (3) auskragenden, festen Stift (7) in Eingriff steht, wobei ein verlängerter Arm (8) des Werkzeugs (10) an der Stange (5) angebracht ist.

2. KNETMASCHINE nach Anspruch 1, **dadurch gekennzeichnet, dass** die kreisförmige 360°-Drehung der Kurbel (1) auf dem Stift (2) mittels des Knopfes (4) die Stange (5) herauszieht, welche in Eingriff steht, um in dem Schlitz (6) auf dem Stift (7) zu gleiten und eine hin- und hergehende Dreh-/Translationsbewegung auf dem besagten Stift auszuführen, so dass das gesamte Werkzeug (10) eine Translations- und Pendelbewegung ausführt, die es dem endgeformten Arbeitsteil (9) des Werkzeug erlaubt, einen Auswärts-/Rückwärtslauf mit einer im Wesentlichen ellipsenförmigen und bis zum gesamten Durchmesser der Schüssel (V) verlängerten Bewegungsbahn (T) auszuführen, die notwendig ist, um den Vorgang den Mischens der gesamten Teigmasse zu bewerkstelligen.

3. KNETMASCHINE nach einem oder mehreren der vorstehenden Ansprüche, **dadurch gekennzeichnet, dass** die Verwendung von zwei Gelenksystemen (101, 102) vorgesehen ist, die einander gegenüberliegend angeordnet sind, wobei zwei Kurbeln (11, 12) auf demselben Mitnehmerzapfen (2) verkeilt sind, während die Stangen (51, 52) entsprechende Schlitze (61, 62) aufweisen, die mit zwei festen Stiften (71, 72) in Eingriff stehen, die aus zwei entsprechenden Stützplatten (31, 32) auskragen, die durch die vertikalen Stützen (40) gestützt werden und aus der Basis (50), auf der die Schüssel (V) angeordnet ist, auskragen.

4. KNETMASCHINE nach Anspruch 3, **dadurch gekennzeichnet, dass** der Mitnehmerzapfen (2) mittels einer kinematischen Steuerung (20) in Drehung versetzt wird, bestehend aus einem Kettenantrieb (21), der von einem auf einer der beiden Stützplatten (32) angebrachten Motor (22) betätigt wird.

5. KNETMACHINE nach Anspruch 3, **dadurch gekennzeichnet, dass** es die beiden Gelenksysteme (101, 102) dem Knetwerkzeug (10), genauer gesagt, den endgeformten Arbeitsteilen (91, 92), erlauben, gleichzeitig zwei Bewegungsbahnen (T₁, T₂) in der gleichen oder in einander entgegengesetzten Richtungen auszuführen.

6. KNETMASCHINE nach einem oder mehreren der vorstehenden Ansprüche, **dadurch gekennzeichnet, dass** es möglich ist, den Mittelpunktabstand (H) der Kurbel, 1, d.h. den Abstand zwischen dem Mitnehmerzapfen (2) und dem Knopf (4) zu variieren.

7. KNETMASCHINE nach einem oder mehreren der vorstehenden Ansprüche, **dadurch gekennzeichnet, dass** es möglich ist, den Winkel (α), der durch die Längsachse der auf dem Mitnehmerzapfen (2) blockierten Kurbel (1) definiert ist, so zu variieren, dass bei Verwendung von zwei Gelenksystemen (101, 102) die beiden Stangen (11, 12), die auf dem gleichen Mitnehmerzapfen (2) blockiert sind, von einer Position, in der sie in Bezug auf die Achse des Mitnehmerzapfens (2) miteinander fluchtend angeordnet sind, zu einer Position variieren können, in der sie - ebenfalls in Bezug auf die Achse des Mitnehmerzapfens (2) - zueinander geneigt angeordnet sind.

8. KNETMASCHINE nach einem oder mehreren der vorstehenden Ansprüche, **dadurch gekennzeichnet, dass** das Werkzeug (10) mit einer Schnellkupplung (70) auf der Stange (5) abnehmbar angebracht ist.

## Revendications

1. PÉTRISSEUSE À UTILISER DANS LE TRAITEMENT DES PÂTES ALIMENTAIRES, à utiliser dans des boulangeries, des usines de production de gressins, des pâtisseries et des industries de la confiserie en général, ainsi que pour une utilisation domestique pour la préparation de pâte pour le pain, les pizzas et la confiserie, du type appelé à bras mécanique, où au moins un outil de pétrissage est monté sur un élément articulé, qui transmet audit outil un mouvement qui permet à l'outil profilé monté à l'extrémité de celui-ci et immergé dans la masse de la pâte d'exécuter les actions nécessaires de mélange et malaxage de la pâte, contenue dans une cuve (V), prévu, en principe, avec un mouvement de rotation, ou fixe, ladite pétrisseuse prévoyant que l'outil de pétrissage (10) termine une trajectoire qui s'étend au-delà de la moitié et jusqu'à être étendue sur tout le diamètre de la cuve (V), de manière que la partie terminale dudit outil, où l'instrument profilé est appliqué (9), qui est immergée dans la masse de la pâte (P), à la fois dans la course de sortie et dans la course de retour, agisse sur toute la masse de la pâte, ladite pétrisseuse **étant caractérisée en ce que** l'outil (10) est doté d'un mouvement de translation/oscillation dans le plan vertical transmis au moyen d'un système articulé (100) constitué par une manivelle (1), tournant sur 360° autour d'un pivot d'entraînement d'extrémité (2), alors qu'un bouton (4) est présent dans l'autre extrémité, ledit bouton étant articulé avec l'extrémité d'une barre (5), dans laquelle une fente est ménagée (6), qui est engagée dans un pivot fixe (7), faisant saillie de la plaque de support (3) au-dessus, un bras étendu (8) de l'outil (10) étant appliqué à ladite barre (5).

2. PÉTRISSEUSE, selon la revendication 1, **caractérisée en ce que** la rotation circulaire sur 360° de la manivelle (1) sur le pivot (2), tire, au moyen du bouton (4), la barre (5) qui, étant engagée pour coulisser dans la fente (6) sur le pivot (7), effectue un mouvement alternatif de rotation/translation sur ledit pivot de manière que la totalité de l'outil (10) suive un mouvement de translation/oscillation, qui permet à l'instrument profilé d'extrémité (9) dudit outil d'effectuer une course de sortie/retour, avec une trajectoire (T) sensiblement elliptique et s'étendant sur tout le diamètre de la cuve (V), nécessaire pour obtenir l'action de mélange et malaxage de toute la masse de la pâte.

3. PÉTRISSEUSE, selon une ou plusieurs des revendications précédentes, **caractérisée en ce qu'**elle prévoit l'utilisation de deux systèmes articulés (101, 102), agencés mutuellement opposés, où deux manivelles (11, 12) sont clavetées sur le même pivot d'entraînement (2), alors que les barres (51, 52) ont des fentes correspondantes (61, 62) qui sont engagées avec deux pivots fixes (71, 72), faisant saillie à partir de deux plaques de support correspondantes (31, 32), supportées par les montants verticaux (40) et faisant saillie à partir de la base (50), où la cuve est placée (V).

4. PÉTRISSEUSE, selon la revendication 3, **caractérisée en ce que** le pivot d'entraînement (2) est mis en rotation au moyen d'une commande cinématique (20) comprenant une transmission par chaîne (21), actionnée par un moteur (22), appliqué sur une des deux plaques de support (32).

5. PÉTRISSEUSE, selon la revendication 3, **caractérisée en ce que** les deux systèmes articulés (101,102) permettent aux deux outils de pétrissage (10), et plus précisément, à des instruments profilés d'extrémité (91, 92), de terminer simultanément deux trajectoires (T_{1,} T₂), ayant les mêmes directions ou des directions réciproquement opposées.

6. PÉTRISSEUSE, selon une ou plusieurs des revendications précédentes, **caractérisée en ce qu'**il est possible de faire varier la distance centrale (H) de la manivelle, 1, qui est la distance entre le pivot d'entraînement (2) et le bouton (4).

7. PÉTRISSEUSE, selon une ou plusieurs des revendications précédentes, **caractérisée en ce qu'**il est possible de faire varier l'angle (a), défini par l'axe longitudinal de la manivelle (1) bloqué sur le pivot d'entraînement (2), de manière que, quand deux systèmes articulés (101, 102) sont utilisés, les deux tiges (11, 12), qui sont bloquées sur le même pivot d'entraînement (2), puissent varier d'une position dans laquelle elles sont mutuellement alignées par rapport à l'axe dudit pivot d'entraînement (2), à une position dans laquelle elles sont réciproquement inclinées, toujours par rapport à l'axe dudit pivot d'entraînement (2).

8. PÉTRISSEUSE, selon une ou plusieurs des revendications précédentes, **caractérisée en ce que** l'outil (10) est appliqué de manière amovible sur la barre (5) au moyen d'un raccord rapide (70).
